# EUROPÄISCHE PATENTSCHRIFT

(11) **EP 2 700 548 B1**
(45) Veröffentlichungstag und Bekanntmachung des Hinweises auf die Patenterteilung: **22.04.2015**
(21) Anmeldenummer: 13003629.6
(22) Anmeldetag: 18.07.2013
(51) Int. Cl.: B60T 7/20, B60T 13/04, B60T 13/74, B60T 13/08

(54) **Elektromechanische Feststellbremse für Fahrzeuganhänger**
Electromechanical parking brake for vehicle trailers
Frein de stationnement électromécanique pour remorques de véhicule

(30) Priorität: 22.08.2012 DE 102012016648
(43) Veröffentlichungstag der Anmeldung: 26.02.2014
(73) Patentinhaber: Knott GmbH, 83125 Eggstätt (DE)
(72) Erfinder: Strasser, Josef, 83257 Gstadt am Chiemsee (DE); Klumpner, Andreas, 83368 Sankt Georgen (DE)
(74) Vertreter: Bauer, Friedrich

(56) Entgegenhaltungen:
- FR-A1- 2 504 223
- GB-A- 2 130 346
- US-A- 2 039 509
- US-A- 3 921 766
- US-A- 3 948 566

## Beschreibung

Die Erfindung betrifft eine Feststellbremse für Fahrzeuganhänger gemäß dem Oberbegriff des Anspruches 1.

Straßenfahrzeuge und deren Anhänger werden häufig mit einer elektrischen Bremsanlage ausgerüstet. Dabei wird bei einzuleitender Bremsung eine Spule in der Betriebsbremse bestromt, die entweder direkt oder über Hebel, Nocken oder ähnliche Elemente Reibbeläge in Bremseingriff bringt.

Gemäß Vorschrift muss jedes Fahrzeug neben einer Betriebsbremse auch eine Feststellbremse haben. Derartige Feststellbremsen müssen derart ausgebildet sein, dass die bremsenden Teile durch eine Einrichtung mit rein mechanischer Wirkung in Bremsstellung gehalten werden. Daher haben auch elektrisch gebremste Fahrzeuge zumindest an einer Achse noch eine mechanische Betätigungseinrichtung zur Betätigung der Radbremsen.

Fahrzeuganhänger erfordern neben der Betriebs- und Feststellbremse auch noch eine Abreißbremse, die bei einem Lösen des Fahrzeuganhängers vom Zugfahrzeug während der Fahrt ein Bremsen des Fahrzeuganhängers bewirken. Bekannte Abreißbremsen arbeiten entweder mit einer mechanischen Zuspanneinrichtung mit einem Abreißmechanismus, der mit der mechanischen Feststellbremse zusammenwirkt, oder bestehen aus einer batteriegespeisten Abreißbremse. Hierdurch entsteht ein großer konstruktiver Aufwand. Außerdem kann ein Anhänger mit elektrischer Bremsanlage an ein Zugfahrzeug angehängt werden, ohne dass die elektrische Verbindung zum Zugfahrzeug hergestellt wurde. Der Anhänger wird in diesem Fall ohne funktionierende Bremsanlage hinter dem Zugfahrzeug hergezogen.

GB2130346 A beschreibt eine konventionelle manuell befestigte Anhänger federspeicher Feststellbremse, ohne elektromechanische Spanneinrichtung.

Der Erfindung liegt die Aufgabe zu Grunde, eine Feststellbremse für Fahrzeuganhänger zu schaffen, die besonders einfach betätigbar, insbesondere für Fahrzeuganhänger mit elektrischer Bremsanlage geeignet und möglichst einfach aufgebaut ist.

Diese Aufgabe wird erfindungsgemäß durch eine Feststellbremse mit den Merkmalen des Anspruchs 1 gelöst. Vorteilhafte Ausführungsformen der Erfindung sind in den weiteren Ansprüchen beschrieben.

Die erfindungsgemäße Feststellbremse weist eine elektromechanische Spanneinrichtung mit einem Elektromotor zum Spannen der Federspeichereinrichtung sowie eine elektrisch betätigbare Arretiereinrichtung auf, die bei Versorgung mit Strom das mit der Federspeichereinrichtung gekoppelte Kraftübertragungselement in einer Verriegelungsstellung hält, in welcher die Federkraft der Federspeichereinrichtung von den Radbremsen abgekoppelt ist, während sie im stromlosen Zustand außer Verriegelungseingriff mit dem Kraftübertragungselement ist.

Eine derartige Feststellbremse lässt sich auf relativ einfache Weise herstellen und in einen Fahrzeuganhänger integrieren. Darüber hinaus bietet die Feststellbremse eine hohe Sicherheit, da die Feststellbremse aufgrund der Federkraft die Radbremsen so lange in Bremseingriff hält, so lange sie nicht mit Strom versorgt wird. Würde man nach dem Anhängen des Fahrzeuganhängers an dem Zugfahrzeug losfahren wollen, ohne die elektrische Verbindung zum Fahrzeuganhänger hergestellt zu haben, würde dies der Fahrer aufgrund der zugespannten Feststellbremse sofort bemerken. Ein Fahren ohne funktionierende Betriebsbremse des Anhängers kann somit ausgeschlossen werden.

Weiterhin wirkt die erfindungsgemäße Feststellbremse gleichzeitig als Abreißbremse. Löst sich der Fahrzeuganhänger vom Zugfahrzeug während der Fahrt, wird die Stromzufuhr zur Feststellbremse unterbunden, wodurch die Arretiereinrichtung den Verriegelungseingriff löst und der Federspeicher die Kraftübertragungseinrichtung, vorzugsweise einen Schwenkhebel, derart betätigen kann, dass ein Bremsvorgang ausgelöst wird.

Da die Stromversorgung der Feststellbremse vom Zugfahrzeug aus erfolgt, benötigt der Fahrzeuganhänger keine eigene Batterie. Weiterhin kann die Feststellbremse auf sehr komfortable Weise betätigt werden, insbesondere durch einen Schalter, der im Zugfahrzeug vorgesehen ist. Die elektromechanische Spanneinrichtung der Feststellbremse kann auch direkt in die Radbremsen integriert werden, so dass in diesem Fall keine Bremsseilzüge oder Bremsgestänge notwendig sind. Es ist jedoch auch ohne weites möglich, die Feststellbremse außerhalb der Radbremsen, insbesondere an der Zugdeichsel, anzubringen. Ferner ist es auch möglich, die erfindungsgemäße Feststellbremse in ein übliches Feststellbremssystem, das einen Handbremshebel aufweist, zu integrieren. Auch eine Kombination mit einer üblichen Auflaufbremsanlage ist ohne weiteres möglich. Es besteht die Möglichkeit der Fernauslösung bzw. Fernüberwachung der Feststellbremsanlage vom Zugfahrzeug aus.

Vorteilhafterweise besteht das Kraftübertragungselement aus einem Schwenkhebel, der schwenkbar an einer Haltekonsole der Festestellbremse gelagert und mit einem Bremsgestänge oder Bremsseil gekoppelt ist, wobei die Federspeichereinrichtung einen von der Feder beaufschlagten Stößel aufweist, der am Schwenkhebel angelenkt ist. Mittels eines derartigen Schwenkhebels lässt sich die Kraft der Federspeichereinrichtung auf konstruktiv einfache Weise auf das Bremsgestänge oder Bremsseil übertragen. Weiterhin lässt sich hierdurch eine Kraftübersetzung realisieren, je nachdem, welchen Abstand das Schwenklager des Schwenkhebels vom Kopplungspunkt mit dem Bremsgestänge oder Bremsseil und zum Kopplungspunkt mit der Federspeichereinrichtung hat.

Vorzugsweise ist auch die elektromechanische Spanneinrichtung mit dem Kraftübertragungselement gekoppelt. Die Spanneinrichtung kann damit über das Kraftübertragungselement die Federspeichereinrichtung spannen und dabei das Kraftübertragungselement in eine Stellung bringen, in welcher die Radbremsen gelöst sind.

Vorteilhafterweise weist die elektromechanische Spanneinrichtung einen vom Elektromotor betätigbaren Spindeltrieb auf, der mit dem Kraftübertragungselement gekoppelt ist. Hierdurch kann auf einfache, kostengünstige und sichere Weise die Drehbewegung des Elektromotors in eine Linearbewegung der Spindelmutter umgewandelt werden. Besonders vorteilhaft ist es hierbei, wenn der Spindeltrieb eine vom Elektromotor drehbare Spindel und eine Spindelmutter umfasst, an der ein Kopplungselement befestigt ist, das, wenn sich die Spanneinrichtung nicht im Spannzustand befindet, vom Kraftübertragungselement derart abgekoppelt ist, dass sich das Kraftübertragungselement in eine Bremsstellung bewegen kann. Dies bedeutet mit anderen Worten, dass die Spanneinrichtung nach dem Spannen der Federspeichereinrichtung in eine Position verfahren wird, in der sie die Bewegung des Kraftübertragungselements, insbesondere Schwenkhebels, nicht behindert. Die Feststellbremse kann damit jederzeit von der Federspeichereinrichtung in die Bremsstellung überführt werden.

Vorzugsweise weist die elektrisch betätigbare Arretiereinrichtung einen Elektromagneten und ein Arretierelement auf, das mit dem Kraftübertragungselement in und außer Verriegelungseingriff bringbar ist und vom Elektromagneten bei Versorgung mit Strom in seiner Verriegelungsstellung gehalten wird. Hierdurch wird auf einfache Weise sicher gestellt, dass bei ordnungsgemäß angeschlossenem Fahrzeuganhänger die Feststellbremse in Lösestellung gehalten wird. Die von der gespannten Federspeichereinrichtung auf das Kraftübertragungselement übertragene Federkraft kann dabei nicht ein Zuspannen der Radbremsen bewirken, da das Arretierelement das Kraftübertragungselement in seiner Bremsenlösestellung hält. Wird dagegen die Stromzufuhr unterbrochen, gibt das Arretierelement das Kraftübertragungselement frei, so dass dieses aufgrund der Federkraft der Federspeichereinrichtung in die Bremsstellung schwenken kann.

Vorzugsweise ist das Arretierelement als Schwenkhebel ausgebildet, der an der Haltekonsole schwenkbar gelagert ist und einerseits eine Verriegelungsnase und andererseits einen Hebelarm aufweist, der mit dem Elektromagneten zusammenwirkt. Eine derartige Arretiereinrichtung kann auf einfache und kostengünstige Weise hergestellt werden. Alternativ hierzu sind jedoch auch andere Arretiereinrichtungen möglich, beispielsweise elektromagnetisch betätigte Schieber, welche das Kraftübertragungselement hintergreifen können.

Die Erfindung wird nachfolgend anhand der Zeichnungen beispielhaft näher erläutert. Es zeigen:
- Figur 1:: eine räumliche Darstellung der erfindungsgemäßen Feststellbremse schräg von oben,
- Figur 2:: einen Vertikalschnitt der Feststellbremse von Figur 1 in Bremsstellung,
- Figur 3:: einen Vertikalschnitt der Feststellbremse beim Lösen der Bremse durch die elektromechanische Spanneinrichtung,
- Figur 4:: einen Vertikalschnitt der Feststellbremse, wobei die Arretiereinrichtung aktiv ist,
- Figur 5:: einen Vertikalschnitt der Feststellbremse, nachdem die Spanneinrichtung in eine Freigabestellung zurückgefahren worden ist,
- Figur 6:: eine Seitenansicht der Feststellbremse von Figur 1 und 2, und
- Figur 7:: Teile einer Auflaufbremsanlage eines Kraftfahrzeuganhängers mit erfindungsgemäßer Feststellbremse.

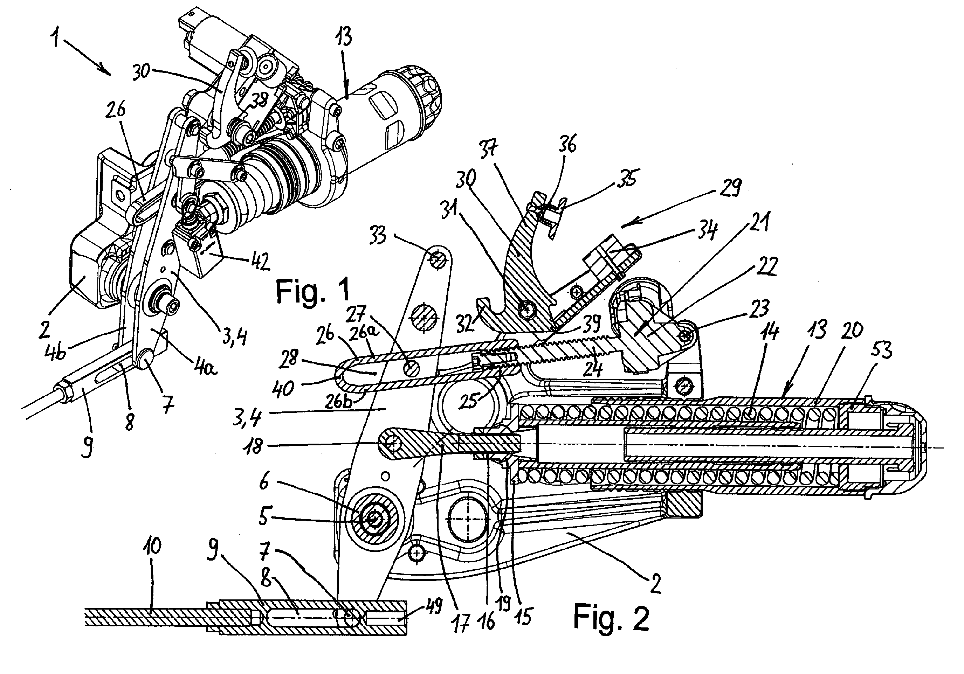

Anhand der Figuren 1 und 2 wird zunächst der grundsätzliche Aufbau der erfindungsgemäßen elektromechanischen Feststellbremse 1 beschrieben.

Die Feststellbremse 1 umfasst eine Haltekonsole 2 zur Befestigung der Feststellbremse 1 beispielsweise an einer nicht dargestellten Zugdeichsel eines Fahrzeuganhängers. An der Haltekonsole 2 ist ein Kraftübertragungselement 3 in der Form eines Schwenkhebels 4 um eine Schwenkachse 5 schwenkbar gelagert. Das entsprechende Schwenklager ist mit 6 bezeichnet. Der Schwenkhebel 4 besteht, wie aus Figur 1 ersichtlich, aus zwei parallelen, zueinander beabstandet angeordneten Schwenkhebelelementen 4a, 4b, die sowohl nach unten als auch nach oben über das Schwenklager 6 vorstehen.

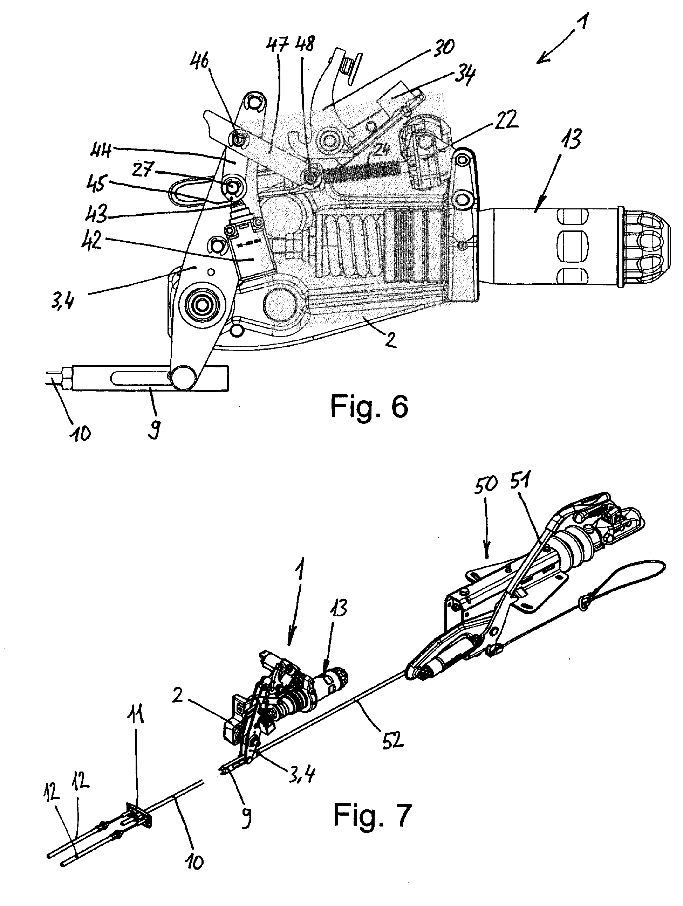

An ihrem unteren Ende sind die Schwenkhebelelemente 4a, 4b mit einem Querbolzen 7 verbunden. Dieser Querbolzen 7 erstreckt sich durch ein Langloch 8 eines Kupplungsstücks 9 hindurch, das mit einem Bremsgestänge 10 oder Bremsseil verbunden ist. Das Bremsgestänge 10 kann beispielsweise, wie aus Figur 7 ersichtlich, mit einer Ausgleichswaage 11 gekoppelt sein, mit der Bowdenzüge 12 betätigt werden, die zu nicht dargestellten Radbremsen geführt sind. Wie aus Figur 1 ersichtlich, erstreckt sich das Kopplungsstück 9 in den Zwischenraum zwischen den beiden Schwenkhebelelementen 4a, 4b hinein.

Die Betätigung der Radbremsen erfolgt dadurch, dass der Schwenkhebel 4 mittels einer Federspeichereinrichtung 13 entgegen dem Uhrzeigersinn um die Schwenkachse 5 in die in Figur 2 gezeigte Stellung geschwenkt wird. Die Federspeichereinrichtung weist hierzu eine Feder 14 in der Form einer Druckfeder auf, deren hinteres Ende über eine Lagerscheibe 15 und eine Stößelhülse 16 mit einem Stößel 17 gekoppelt ist. Das vordere Ende des Stößel 17 ist in die Stößelhülse 16 eingeschraubt, während das hintere Ende des Stößels 17 über einen Gelenkbolzen 18 gelenkig mit dem Schwenkhebel 4 verbunden ist. Das hintere Ende des Stößels 17 erstreckt sich dabei wieder in den Zwischenraum zwischen den Schwenkhebelelementen 4a, 4b hinein.

Um bei einer Schwenkbewegung des Schwenkhebels 4 eine variierende Schräglage des Stößel 17 relativ zur Längsachse der Feder 14 zu ermöglichen, weisen die Lagerscheibe 15 und die Stößelhülse 16 anliegende kalottenförmige Kontaktflächen 19 auf.

Die Feder 14 ist innerhalb eines rohrförmigen Federspeichergehäuses 20 angeordnet, das an der Haltekonsole 2 befestigt ist und, wie dargestellt, über diese vorstehen kann, um eine ausreichend lange Feder 14 aufnehmen zu können. Die Feder 14 stützt sich mit ihrem vorderen Ende an einer Anschlaghülse 53 ab, die am vorderen Ende des Federspeichergehäuses 20 befestigt ist.

In Figur 2 ist die Feder 14 in einer etwas entspannten Stellung dargestellt. In dieser Stellung wird das obere Ende des Schwenkhebels 4 nach hinten, d.h. in Figur 2 nach links, gedrückt, wodurch das untere Ende des Schwenkhebels 4 nach vorne, d.h. in Figur 2 nach rechts, bewegt und dadurch das Bremsgestänge 10 nach vorn in eine die Radbremsen zuspannende Bremsstellung gezogen wird.

Oberhalb der Federspeichereinrichtung 13 ist eine elektromechanische Spanneinrichtung 21 angeordnet. Diese Spanneinrichtung 21 umfasst einen lediglich schematisch dargestellten Elektromotor 22, der an seinem vorderen Ende über ein Lager 23 gelenkig an der Haltekonsole 2 abgestützt ist. Der Elektromotor 22 dient zum Antreiben einer Spindel 24, die sich vom Elektromotor 22 nach hinten erstreckt. Die Spindel 24 wirkt mit einer Spindelmutter 25 derart zusammen, dass beim Drehen der Spindel 24 die Spindelmutter 25 in Längsrichtung der Spindel 24 verlagert wird. Von der Spindelmutter 25 erstreckt sich ein längliches, U-förmig gebogenes Kopplungselement 26 nach hinten in den Zwischenraum zwischen den Schwenkhebelelementen 4a, 4b hinein. Ein am Schwenkhebel 4 befestigter Querzapfen 27 erstreckt sich dabei durch den zwischen einem oberen Schenkel 26a und unteren Schenkel 26b des Kopplungselements 26 gebildeten Freiraum 28 hindurch. Die Länge des Kopplungselement 26 ist derart bemessen, dass in der maximal ausgefahrenen Stellung der Spindelmutter 25, die in Figur 2 gezeigt ist, der Freiraum 28 beiderseits des Querzapfens 27 ausreichend groß ist, so dass die durch die Feder 14 verursachte Schwenkbewegung des Schwenkhebels 4 nicht behindert wird.

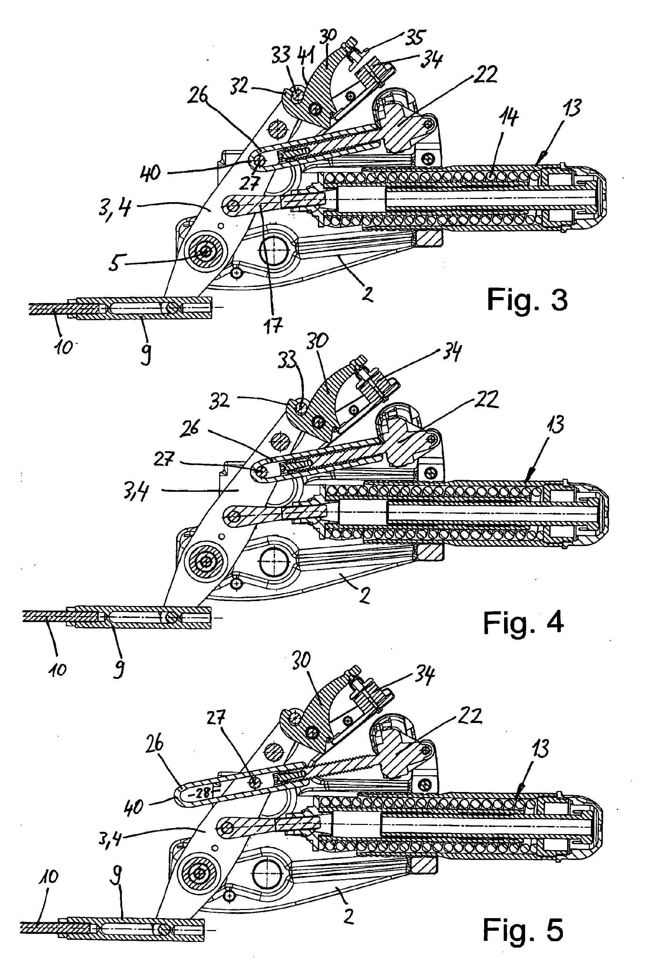

Oberhalb der Spanneinrichtung 21 ist weiterhin eine elektrisch betätigbare Arretiereinrichtung 29 zum Arretieren des Schwenkhebels 4 in einer Stellung, die in den Figuren 3 bis 5 dargestellt ist und später noch näher erläutert wird, vorgesehen. Diese Arretiereinrichtung 29 umfasst ein Arretierelement 30, das als Schwenkhebel ausgebildet und mittels eines Gelenkbolzens 31 schwenkbar an der Haltekonsole 2 gelagert ist.

Das Arretierelement 30 weist eine hakenförmige Verriegelungsnase 32 auf, die ab einer bestimmten Schwenkstellung des Schwenkhebels 4 mit einem Querbolzen 33 des Schwenkhebels 4 in Eingriff gelangt und diesen hintergreift, wenn das Arretierelement 30 zusätzlich im Uhrzeigersinn geschwenkt wird.

Um das Arretierelement 30 in der Verriegelungsstellung zu halten, die in den Figuren 4 und 5 dargestellt ist, umfasst die Arretiereinrichtung 29 weiterhin einen Elektromagneten 34, der an der Haltekonsole 2 befestigt ist. Der Elektromagnet 34 wirkt mit einer Kontaktscheibe 35 zusammen, die mittels einer Feder 36 flexibel an einem Hebelarm 37 des Arretierelements 30 befestigt ist. Befindet sich die Kontaktscheibe 35 ausreichend nah am Elektromagneten 34 und wird dieser mit Strom versorgt, wird die Kontaktscheibe 35 am Elektromagneten 34 und damit das Arretierelement 30 in seiner Verriegelungsstellung gehalten. Im stromlosen Zustand des Elektromagneten 34 wird dagegen, wenn sich auch der Schwenkhebel 4 in der in Figur 2 gezeigten Stellung befindet, das Arretierelement 30 mittels einer im Bereich des Gelenkbolzens 31 angeordneten Schenkelfeder 38 (Figur 1) in die in Figur 2 gezeigte Freigabestellung zurückgeschwenkt. Ein unterer Anschlag 39 des Arretierelements 30 schlägt in der Endstellung an der Haltekonsole 2 an und stoppt dadurch das Zurückschwenken des Arretierelements 30 in einer vorbestimmten Position.

Nachfolgend wird anhand der Figuren 2 bis 5 die Funktionsweise der erfindungsgemäßen Feststellbremse 1 erläutert.

Figur 2 stellt einen Zustand dar, der eingenommen wird, wenn der Fahrzeuganhänger vom Zugfahrzeug abgekoppelt ist, so dass die Feststellbremse 1 stromlos ist. In diesem Zustand ist die Spindelmutter 25 und damit das Kopplungselement 26 maximal ausgefahren, so dass der Querzapfen 27 des Schwenkhebels 4 innerhalb des Freiraums 28 frei verschiebbar ist und die Schwenkung des Schwenkhebels 4 durch das Kopplungselement 26 nicht behindert wird. Die Spanneinrichtung 21 nimmt diese Stellung aufgrund eines vorausgegangenen Steuerbefehls einer Kontrolleinheit ein, die am Fahrzeuganhänger vorgesehen ist. Das Arretierelement 30 befindet sich in seiner Freigabestellung, in der der Schwenkhebel 4 außer Eingriff mit der Verriegelungsnase 32 ist. Da keine Stromversorgung vorhanden ist, ist der Elektromagnet 34 deaktiviert.

Die Feder 14 der Federspeichereinrichtung 13 kann in diesem Zustand den Stößel 17 nach hinten drücken und den Schwenkhebel 4 entgegen dem Uhrzeigersinn schwenken, wodurch die Radbremsen über das Bremsgestänge 10 in Bremseingriff gehalten werden.

Wird nun der Fahrzeuganhänger an das Zugfahrzeug angekoppelt und das Elektrokabel des Fahrzeuganhängers mit der Steckdose des Zugfahrzeugs verbunden, kann die Steuereinheit der Feststellbremse automatisch einen Steuerbefehl zum Lösen der Feststellbremse senden oder der Fahrer des Zugfahrzeugs betätigt einen Schalter zum Lösen der Feststellbremse. Dieser Schalter befindet sich vorzugsweise im Zugfahrzeug, kann jedoch auch am Fahrzeuganhänger angeordnet sein. Bei Betätigen des Schalters wird von der Kontrolleinheit des Fahrzeuganhängers ein Steuerbefehl an die Spanneinrichtung 21 ausgegeben, die Feder 14 der Federspeichereinrichtung 13 zu spannen und dabei die Radbremsen zu lösen. Dieser Zustand ist in Figur 3 dargestellt. Der Elektromotor 22 dreht die Spindel 24 derart, dass die Spindelmutter 25 und damit das Kopplungselement 26 nach vorne gefahren werden, wobei der Spindeltrieb verkürzt wird. Das hintere Ende 40 des Kopplungselements 26 kommt mit dem Querzapfen 27 des Schwenkhebels 4 in Eingriff und bewegt diesen nach vorne. Der Schwenkhebel 4 wird dadurch im Uhrzeigersinn um die Schwenkachse 5 geschwenkt. Der Schwenkhebel 4 drückt dabei den Stößel 17 nach vorne, d.h. in Figur 3 nach rechts, wodurch die Feder 14 zusammengedrückt und dadurch gespannt wird.

Bei der Schwenkbewegung des Schwenkhebels 4 im Uhrzeigersinn kommt der obere Querbolzen 33 des Schwenkhebels 4 mit einer Kontaktfläche 41 des Arretierelements 30 in Kontakt. Wird nun der Schwenkhebel 4 weiter im Uhrzeigersinn geschwenkt, schwenkt der Querbolzen 33 das Arretierelement 30 ebenfalls im Uhrzeigersinn, wodurch das obere Ende des Arretierelements 30 und damit die Kontaktscheibe 35 dem Elektromagneten 34 angenähert werden. In diesem Zustand hintergreift die Verriegelungsnase 32 des Arretierelements 30 bereits etwas den Querbolzen 33.

Durch die Stromzufuhr wird auch der Elektromagnet 34 aktiviert und zieht die Kontaktscheibe 35 zu sich heran, wie in Figur 4 dargestellt. Hierdurch wird das Arretierelement soweit im Uhrzeigersinn geschwenkt, dass die Verriegelungsnase 32 den Querbolzen 33 hintergreift und dadurch den Schwenkhebel 4 in der nun eingenommenen Schwenkstellung verriegelt. In dieser in Figur 4 dargestellten Verriegelungsstellung ist die Feder 14 maximal zusammengeschoben, d.h. die Federspeichereinrichtung 13 maximal gespannt. Gleichzeitig befindet sich das untere Ende des Schwenkhebels 4 in seiner hintersten Stellung, d.h. in Figur 4 ganz links, so dass die Radbremsen gelöst sind.

Unmittelbar nachdem der Schwenkhebel 4 in der in Figur 4 gezeigten Stellung mittels der Arretiereinrichtung 29 verriegelt worden ist, erhält die Spanneinrichtung 21 von der Kontrolleinheit den Befehl, das Kopplungselement 26 in seine ausgefahrene Stellung zurückzufahren. Dieser Zustand ist in Figur 5 dargestellt. Hierdurch wird sichergestellt, dass zwischen dem hinteren Ende 40 des Kopplungselements 26 und dem Querzapfen 27 ein genügend großer Freiraum 28 vorhanden ist, um dann, wenn die Feststellbremse 1 wieder zugespannt werden soll, die Schwenkbewegung des Schwenkhebels 4 entgegen dem Uhrzeigersinn nicht zu behindern.

Aus der Seitenansicht von Figur 6 ist weiterhin erkennbar, dass neben dem Schwenkhebel 4 ein elektrischer Schalter 42 angeordnet ist. Dieser Schalter 42 weist an seinem oberen Ende einen Schaltkontakt 43 auf. Dieser Schaltkontakt 43 ist von einem Schalthebel 44 betätigbar, der am Querzapfen 27 schwenkbar gelagert ist und an seinem unteren Ende einen vorspringenden Nocken 45 aufweist. Je nach Drehstellung des Schalthebels 44 kommt der Nocken 45 in oder außer Kontakt mit dem Schaltkontakt 43. Diese Schalteinrichtung dient dazu, der Kontrolleinheit anzuzeigen, ob sich die Spanneinrichtung 22 in der freigefahrenen Position befindet, d.h. ob das Kopplungselement 26 in die in Figur 5 dargestellte ausgefahrene Position zurückgefahren worden ist, in welcher die Spannrichtung 21 das Schwenken des Schwenkhebels 4 in seine Bremsstellung nicht behindert.

Das Schwenken des Schalthebels 44 um den Querzapfen 27 erfolgt dadurch, dass der Schwenkhebel 44 über ein Gelenk 46 mit einem weiteren Schwenkhebel 47 gelenkig verbunden ist, dessen vorderes Ende wiederum über ein Gelenk 48 mit der Spindelmutter 25 verbunden ist. Bei einem Verfahren der Spindelmutter 25 längs der Spindel 24 verändert sich somit der Abstand zwischen dem Gelenk 48 und dem Querzapfen 27, was zu einer Schwenkbewegung des Schalthebels 44 und zu einer entsprechenden Schaltbewegung des Nockens 45 führt.

Die anhand der Figuren 1 bis 6 dargestellte Feststellbremse 1 kann als selbstständige, alleinige Feststellbremse eingesetzt werden. Weiterhin kann die Feststellbremse 1 auch als Abreißbremse wirken, indem am Kupplungsstück 9 des Bremsgestänges 10 ein zum Zugfahrzeug geführtes Abreißseil befestigt wird. Hierzu ist am vorderen Ende des Kupplungsstücks 9 eine in Figur 2 dargestellte Bohrung 49, beispielsweise Gewindebohrung, vorgesehen, in welcher ein Kupplungsstück des Abreißseils befestigt werden kann.

Weiterhin ist es auch möglich, wie aus Figur 7 ersichtlich, die Feststellbremse 1 mit einer Auflaufbremseinrichtung 50 eines Fahrzeuganhängers zu kombinieren, die auch einen üblichen Handbremshebel 51 umfassen kann. Hierbei wird das Bremsgestänge 52 der Auflaufbremseinrichtung 50 über die Bohrung 49 am Kupplungsstück 9 (Figur 2) befestigt.

Um bei dieser Integration der Feststellbremse 1 in eine Auflaufbremseinrichtung 50 sicherzustellen, dass die Radbremsen von der Auflaufbremseinrichtung 50 über das Bremsgestänge 52, 10 betätigt werden können, ohne durch den Schwenkhebel 4 der Feststellbremse 1 behindert zu werden, ist das Langloch 8 des Kupplungsstücks 9 so bemessen, dass das Bremsgestänge 52, 10 nach vorne gezogen werden kann, ohne den Schwenkhebel 4 mit zu schwenken. Der Querbolzen 7 gleitet dabei frei im Langloch 8.

Die erfindungsgemäße Feststellbremse 1 ist auf verschiedene Weise betätigbar. Vorzugsweise erfolgt das Lösen der Feststellbremse 1 nach dem Ankuppeln des Fahrzeuganhängers an das Zugfahrzeug erst nach dem Betätigen eines Schalters durch den Fahrer nach erfolgreichem Selbsttest des Bremssystems. Alternativ kann die Feststellbremse 1 auch nach erfolgreicher Initialisierung und nach dem Selbsttest der elektronischen Steuereinheit des Fahrzeuganhängers automatisch freigegeben werden, wenn der Elektrostecker des Fahrzeuganhängers in die Steckdose des Zugfahrzeugs eingesteckt und die elektrische Verbindung zum Fahrzeuganhänger hergestellt worden ist.

Die erfindungsgemäße Feststellbremse 1 eignet sich besonders zum Einsatz bei elektrischen Radbremsen, die zusätzlich zur elektrischen Zuspanneinrichtung auch noch eine zweite, rein mechanische Zusapnneinrichtung aufweisen. Diese rein mechanische Zuspanneinrichtung kann entweder ein Spreizschloss oder auch eine Nocke sein. Die Feststellbremse 1 wirkt dann mit der mechanischen Zuspanneinrichtung zusammen. Die Betriebsbremsung läuft dabei in bekannter Weise über die Bestromung einer Magnetspule in der Radbremse.

Die erfindungsgemäße Feststellbremse 1 kann weiterhin auch bei abknickbaren Deichseln eingesetzt werden.

## Patentansprüche

1. Feststellbremse für Fahrzeuganhänger mit
- einer eine Feder (14) aufweisenden Federspeichereinrichtung (13),
- einer mechanischen Kraftübertragungseinrichtung zum Übertragen der Federkraft zu mindestens einer Radbremse, wobei die Kraftübertragungseinrichtung ein mit der Federspeichereinrichtung (13) gekoppeltes Kraftübertragungselement (3) aufweist,
**dadurch gekennzeichnet, dass** die Feststellbremse (1) eine elektromechanische Spanneinrichtung (21) mit einem Elektromotor (22) zum Spannen der Federspeichereinrichtung (13) sowie eine elektrisch betätigbare Arretiereinrichtung (29) aufweist, die bei Versorgung mit Strom das mit der Federspeichereinrichtung (13) gekoppelte Kraftübertragungselement (3) in einer Verriegelungsstellung hält, in welcher die Federkraft der Federspeichereinrichtung (13) von den Radbremsen abgekoppelt ist, während sie im stromlosen Zustand außer Verriegelungseingriff mit dem Kraftübertragungselement (3) ist.

2. Feststellbremse nach Anspruch 1, **dadurch gekennzeichnet, dass** das Kraftübertragungselement (3) aus einem Schwenkhebel (4) besteht, der schwenkbar an einer Haltekonsole (2) der Feststellbremse (1) gelagert und mit einem Bremsgestänge (10) oder Bremsseil gekoppelt ist, wobei die Federspeichereinrichtung (13) einen von der Feder (14) beaufschlagten Stößel (17) aufweist, der am Schwenkhebel (4) angelenkt ist.

3. Feststellbremse nach Anspruch 1 oder 2, **dadurch gekennzeichnet, dass** die elektromechanische Spanneinrichtung (21) mit dem Kraftübertragungselement (3) gekoppelt ist.

4. Feststellbremse nach einem der vorhergehenden Ansprüche, **dadurch gekennzeichnet, dass** die elektromechanische Spanneinrichtung (21) einen vom Elektromotor (22) betätigbaren Spindeltrieb aufweist, der mit dem Kraftübertragungselement (3) gekoppelt ist.

5. Feststellbremse nach Anspruch 4, **dadurch gekennzeichnet, dass** der Spindeltrieb eine vom Elektromotor (22) drehbare Spindel (24) und eine Spindelmutter (25) umfasst, an der ein Kopplungselement (26) befestigt ist, das, wenn sich die Spanneinrichtung (21) nicht im Spannzustand befindet, vom Kraftübertragungselement (3) derart abgekoppelt ist, dass sich das Kraftübertragungselement (3) in eine Bremsstellung bewegen kann.

6. Feststellbremse nach einem der vorhergehenden Ansprüche, **dadurch gekennzeichnet, dass** die elektrisch betätigbare Arretiereinrichtung (29) einen Elektromagneten (34) und ein Arretierelement (30) aufweist, das mit dem Kraftübertragungselement (3) in und außer Verriegelungseingriff bringbar ist und vom Elektromagneten (34) bei Versorgung mit Strom in seiner Verriegelungsstellung gehalten wird.

7. Feststellbremse nach Anspruch 6, **dadurch gekennzeichnet, dass** das Arretierelement (30) als Schwenkhebel ausgebildet ist, der an der Haltekonsole (2) schwenkbar gelagert ist und einerseits eine Verriegelungsnase (32) und andererseits einen Hebelarm (37) aufweist, der mit dem Elektromagneten (34) zusammenwirkt.

## Claims

1. Parking brake for vehicle trailers, comprising
- a spring-energy store (13) having a spring (14),
- a mechanical force transmission device for transmitting the spring force to at least one wheel brake, the force transmission device comprising a force transmission element (3) which is coupled to the spring-energy store (13),
**characterised in that** the parking brake (1) comprises an electromechanical clamping device (21) which has an electric motor (22) and is intended for clamping the spring-energy store (13), and an electrically operable locking device (29) which, when supplied with current, holds the force transmission element (3), which is coupled to the spring-energy store (13), in a locked position in which the spring force of the spring-energy store (13) is uncoupled from the wheel brakes, whereas, when de-energised, said locking device is not engaged in a locked manner with the force transmission element (3).

2. Parking brake according to claim 1, **characterised in that** the force transmission element (3) consists of a pivot lever (4) which is pivotally mounted on a retaining bracket (2) of the parking brake (1) and is coupled to a brake linkage (10) or brake cable, the spring-energy store (13) comprising a pusher (17) which is loaded by the spring (14) and is connected to the pivot lever (4).

3. Parking brake according to either claim 1 or claim 2, **characterised in that** the electromechanical clamping device (21) is coupled to the force transmission element (3).

4. Parking brake according to any of the preceding claims, **characterised in that** the electromechanical clamping device (21) comprises a spindle drive which can be operated by means of the electric motor (22) and is coupled to the force transmission element (3).

5. Parking brake according to claim 4, **characterised in that** the spindle drive comprises a spindle (24), which can be rotated by the electric motor (22), and a spindle nut (25) to which a coupling element (26) is attached, which coupling element is decoupled from the force transmission element (3) when the clamping device (21) is not in the clamped state in such a way that the force transmission element (3) can move into a brake position.

6. Parking brake according to any of the preceding claims, **characterised in that** the electrically operable locking device (29) comprises an electromagnet (34) and a locking element (30) which can be brought into and out of locking engagement with the force transmission element (3) and, when supplied with current, is retained in its locked position by means of the electromagnet (34).

7. Parking brake according to claim 6, **characterised in that** the locking element (30) is designed as a pivot lever which is pivotally mounted on the retaining bracket (2) and comprises a locking lug (32) at one end and a lever arm (37), which interacts with the electromagnet (34), at the other end.

## Revendications

1. Frein d'immobilisation pour remorque de véhicule, comprenant
- un système accumulateur à ressort (13) comprenant un ressort (14),
- un système de transmission de force mécanique pour la transmission de la force du ressort à au moins un frein de roue, dans lequel le système de transmission de force comprend un élément de transmission de force (3) couplé au système accumulateur à ressort (13),
**caractérisé en ce que** le frein d'immobilisation (1) comprend un moyen de tensionnement électromécanique (21) avec un moteur électrique (22) pour bander le système accumulateur à ressort (13) ainsi qu'un moyen de blocage (29) à actionnement électrique qui, lorsqu'il est alimenté en courant, maintient l'élément de transmission de force (3) couplé au système accumulateur à ressort (13) dans une position de verrouillage dans laquelle la force du système accumulateur à ressort (13) est découplée vis-à-vis des freins de roue, alors que dans l'état sans courant, il se trouve hors de l'engagement de verrouillage avec l'élément de transmission de force (3).

2. Frein d'immobilisation selon la revendication 1, **caractérisé en ce que** l'élément de transmission de force (3) est constitué par un levier pivotant (4) qui est monté en pivotement sur une console de maintien (2) du frein d'immobilisation (1) et qui est couplé à une tringlerie de frein (10) ou à un câble de frein, de sorte que le système accumulateur à ressort (13) comprend un poussoir (17) attaqué par le ressort (14) et articulé sur le levier pivotant (4).

3. Frein d'immobilisation selon la revendication 1 ou 2, **caractérisé en ce que** le dispositif de tensionnement électromécanique (21) est couplé avec l'élément de transmission de force (3).

4. Frein d'immobilisation selon l'une des revendications précédentes, **caractérisé en ce que** le dispositif de tensionnement électromécanique (21) comprend un entraînement à broche susceptible d'être actionné par le moteur électrique (22), qui est accouplé à l'élément de transmission de force (3).

5. Frein d'immobilisation selon la revendication 4, **caractérisé en ce que** l'entraînement à broche comprend une broche (24) susceptible d'être mise en rotation par le moteur électrique (22) et un écrou (25) sur lequel est fixé un élément de couplage (26) qui, lorsque le dispositif de tensionnement (21) ne se trouve pas dans l'état bandé, est découplé vis-à-vis de l'élément de transmission de force (3) de telle façon que l'élément de transmission de force (3) peut se déplacer jusque dans une position de freinage.

6. Frein d'immobilisation selon l'une des revendications précédentes, **caractérisé en ce que** le dispositif de blocage (29) à actionnement électrique comprend un électroaimant (34) et un élément de blocage (30) qui peut être amené en engagement de verrouillage ou hors d'un engagement de verrouillage avec l'élément de transmission de force (3), et qui est maintenu par l'électroaimant (34) dans sa position de verrouillage lors de l'alimentation en courant.

7. Frein d'immobilisation selon la revendication 6, **caractérisé en ce que** l'élément de blocage (30) est réalisé sous la forme d'un levier pivotant qui est monté en pivotement sur la console de maintien (2) et comprend d'une part un ergot de verrouillage (32) et d'autre part un bras de levier (37) qui coopère avec l'électroaimant (34).
